# EUROPÄISCHE PATENTSCHRIFT

(11) **EP 1 083 040 B1**
(45) Veröffentlichungstag und Bekanntmachung des Hinweises auf die Patenterteilung: **27.11.2002**
(21) Anmeldenummer: 00116982.0
(22) Anmeldetag: 08.08.2000
(51) Int. Cl.: B29C 51/30, B65D 1/26

(54) **Formwerkzeug zum Herstellen von Behältern aus einer erwärmten thermoplastischen Kunststofffolie und Behälter**
Mould for the fabrication of containers made of a heated thermoplastic film and container
Moule pour la fabrication de récipients à partir d'un film thermoplastique chauffé et récipient

(30) Priorität: 08.09.1999 DE 19942874
(43) Veröffentlichungstag der Anmeldung: 14.03.2001
(73) Patentinhaber: Adolf Illig Maschinenbau GmbH & Co, D-74081 Heilbronn (DE)
(72) Erfinder: Geist, Gerhard, 74074 Heilbronn (DE)

(56) Entgegenhaltungen:
- EP-A- 0 086 869
- GB-A- 2 030 953
- GB-A- 2 187 083
- GB-A- 2 187 129
- US-A- 3 248 000

## Beschreibung

Die Erfindung betrifft ein Formwerkzeug zum Herstellen von Behältern aus einer erwärmten thermoplastischen Kunststofffolie durch Tiefziehen. Es besteht aus einem Oberteil und einem Unterteil, wobei beide relativ zueinander verschiebbar sind. Das Unterteil weist dabei die eigentlichen Formen für die Behälter auf, das Oberteil einen Druckluftanschluss zum Zuführen der Formluft und bei kombiniert formenden und stanzenden Formwerkzeugen eine Matrize und Niederhalter. Ein solches Formwerkzeug wird in die Formstation einer Thermoformmaschine eingebaut. Die Erfindung betrifft ferner einen Behälter, hergestellt mit diesem Formwerkzeug.

Aus der US 3 248 000 ist ein Formwerkzeug bekannt, mit dem Behälter mit Flachrand geformt und ausgestanzt werden. Der den Randbereich formende Teil des Formwerkzeuges weist eine Schulter Pos. 25 auf, die eine ringsum verlaufende Kerbe im Behälter einformt. Unter Stabilitätsgesichtpunkten betrachtet bewirkt diese Kerbe eine Schwächung des Behälterrandes, er biegt sich unter Belastung leichter.

Die GB 2 187 129 zeigt ein Formwerkzeug, mit dem Behälter mit U-förmigem Rand geformt werden. Solche Behälter mit U-förmigem Rand finden häufig als Trinkbecher Verwendung, wobei jedoch nach dem Formen und Ausstanzen der Behälter eine Bördelung dieses U-förmigen Randes zur Vermeidung einer Verletzung der Lippen vorgenommen wird. In dieser Schrift wird vorgeschlagen, zum leichteren Umlegen des Behälterrandes diesen mit ringsum verlaufenden Kerben zu versehen, wozu die formgebenden Bauteile mit entsprechenden Erhöhungen Pos. 16, 22, 24 versehen sind. Unter Stabilitätsgesichtpunkten betrachtet bewirken diese Kerben ebenfalls eine Schwächung des Behälterrandes gegen Verbiegen bzw. Bördeln.

Um diese Bördelung durchzuführen werden diese Behälter bekannterweise ineinandergestapelt und als Einzelstapel einer Bördeleinrichtung zugeführt, wie sie z.B. aus der DE 40 30 833 C2 bekannt ist. Bördeleinrichtungen dieser Art arbeiten mit drei oder vier Bördelwalzen, die eine schraubenförmige Nut aufweisen, die den U-förmigen Rand des Behälters in sich aufnehmen und die Behälter durch die Bördeleinrichtung führen. Der Behälterrand wird in einem Heizbereich beheizt und durch eine kontinuierliche Verengung der schraubenförmigen Nut in einem Formbereich wird die Umbördelung des Behälterrandes herbeigeführt.

Ziel der Behälterherstellung ist die Einsparung von Material, d.h. es soll möglichst dünne Folie zum Einsatz kommen und durch eine entsprechende Gestaltung der Behälterform (z.B. Verrippungen) wird versucht, den Behältern trotzdem die erforderliche Stabilität zu verleihen. Dies hat aber auch einen dünnen Behälterrand zur Folge, die das Bördeln erschwert.

Ferner geht der Trend aus verschiedenen Gründen zur Verwendung von Polypropylen als Kunststoff für die Behälter. Polypropylen hat die Eigenschaft, dass es eine größere Wärmeenergie zur Erwärmung erfordert als z.B. Polystyrol. Zudem ist die Verformungstemperatur relativ hoch (ca. 160 °C). Es tritt also beim Bördeln das Problem auf, den Behälterrand relativ hoch aufheizen zu müssen, wodurch der dünne Behälterrand die durch die Verengung der Bördelnut bem Bördeln auftretenden Axial- und Radialkräfte nicht aufnehmen kann und sich undefiniert verformt.

Der Erfindung liegt die Aufgabe zugrunde, das Formwerkzeug zur Herstellung von Behältern so auszubilden, dass die damit geformten Behälter einen stabileren Randbereich aufweisen, der beim Bördeln weniger Probleme bezüglich einer undefinierten Verformung mit sich bringt.

Zur Lösung der Aufgabe werden die Merkmale des Hauptanspruches vorgeschlagen. Der entsprechend gestaltete Behälter ist in Anspruch 5 beansprucht. Weiterbildungen sind in den Unteransprüchen beschrieben.

Ein Ausführungsbeispiel und vorteilhafte Weiterbildungen des Formwerkzeuges und der Behälter sind an Hand der schematischen Zeichnungen näher beschrieben. Es zeigen:
- Figur 1: einen Querschnitt durch das gesamte Formwerkzeug
- Figur 2: eine vergrößerte Darstellung des den Randbereich formenden Teiles des Formwerkzeuges
- Figur 3: eine weitere vergrößerte Darstellung des den Randbereich formenden Teiles des Formwerkzeuges
- Figur 4 und 5: einen Querschnitt durch den Randbereich des Formwerkzeuges entlang der Linie A - A in Figur 3 in zwei Ausführungsformen.
- Figur 6: eine Draufsicht auf einen Teil des Formwerkzeuges
- Figur 7 und 8: den Randbereich eines Behälters in zwei Ausführungsformen

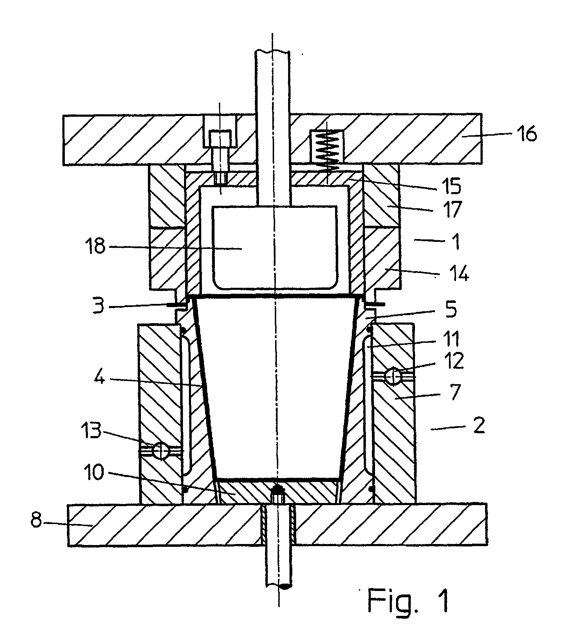

Das kombiniert formende und stanzende Formwerkzeug gemäß Figur 1 besteht aus einem Oberteil 1 und einem Unterteil 2, die relativ zueinander verschiebbar sind und im Zusammenwirken eine Folie 3 zu Behältern 4 in bekannter Weise mittels Druckluft verformen und diese anschließend ausstanzen. Hierzu weist das Unterteil 2 pro Formnest einen Schnittstempel 5 mit einer Schnittkante 6 und einen höhenbeweglichen Formboden 10. auf, ferner eine Aufnahme 7 und die Grundplatte 8 Im Schnittstempel 5 kann ein Formeinsatz 9 eingesetzt sein, der der Form des Behälters 4 entspricht. Schnittstempel 5 und Formeinsatz 9 können aber auch bei einfacheren Formen einstückig ausgebildet sein wie in Figur 1 dargestellt. Zwischen Schnittstempel 5 und Aufnahme 7 ist eine Kühlkammer 11 zur Kühlung der geformten Behälter 4 eingearbeitet, die mit einer Wasserzuführung 12 und einer Wasserableitung 13 versehen ist.

Das Oberteil 1 setzt sich zusammen aus der Matrize 14, der Kopfplatte 16 und der Zwischenplatte 17, sowie einem Niederhalter 15 und einem Streckhelfer 18 pro Formnest. Über einen nicht dargestellten Anschluss wird taktweise Druckluft ins Innere des Oberteils geführt. Das Formwerkzeug weist wie dargestellt eine oder mehrere Reihen von Formnestern auf, wobei jede Reihe mehrere Formnester beinhaltet. Oberteil 1 und Unterteil 2 sind über nicht dargestellte Führungen zueinander geführt und in die Formstation einer taktweise arbeitenden Thermoformmaschine eingebaut.

Bei einem nur formenden Werkzeug entfallen die Schnittkanten 6 und 21 und die Matrize 14 und das Ausstanzen der Behälter 4 erfolgt in einer nachgeschalteten Stanzstation. Anstelle eines Schnittstempels 5 bzw. eines Schnittstempels 5 mit Formeinsatz 9 ist in diesem Fall nur eine Form vorgesehen.

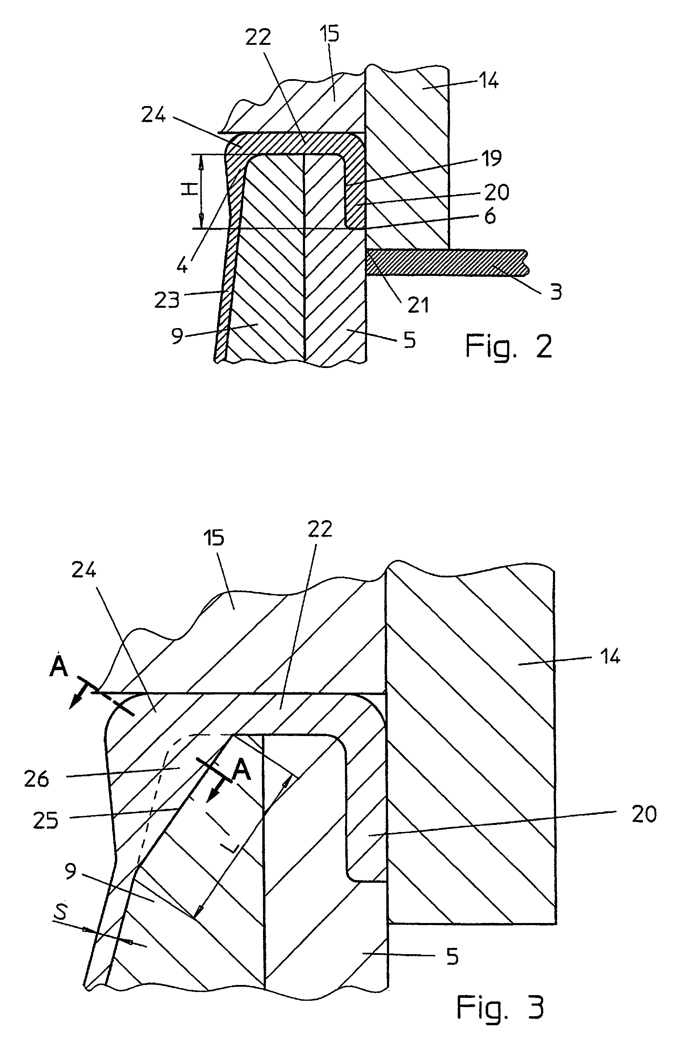

Figur 2 zeigt den vergrößerten Bereich des Formwerkzeuges, der dem Behälterrand eine U-förmige Gestalt verleiht und aus einem Schnittstempel 5 und einem eingesetzten Formeinsatz 9 besteht. Hierzu ist der Schnittstempel 5 mit einer Aussparung 19 mit der Höhe H versehen. Diese Aussparung 19 bildet beim Formen den äußeren Flansch 20 des U-förmigen Randbereiches, wenn die Schnittkante 6 in Zusammenwirken mit der Schnittkante 21 der Matrize 14 den Behälter 4 austrennt. Der Flansch 20 des Behälters 4 geht über in einen horizontalen Randbereich 22, dieser in die Behälterwand 23, die meist konisch gestaltet ist. Selbstverständlich kann der Übergang zwischen Behälterwand 23 und Flansch 20 auch abgerundet verlaufen.

Aus formungstechnischen Gründen weist der Übergangsbereich zwischen Behälterwand 23 und horizontalem Randbereich 22 des Behälters 4 meist eine Verdickung 24 auf, hervorgerufen durch die Quetschung dieses Bereiches zwischen Niederhalter 15 und Oberkante Schnittstempel 5 bzw. Formeinsatz 9. Die Behälterwand 23 selbst hat eine Wandstärke S im Größenbereich von 0,3 mm.

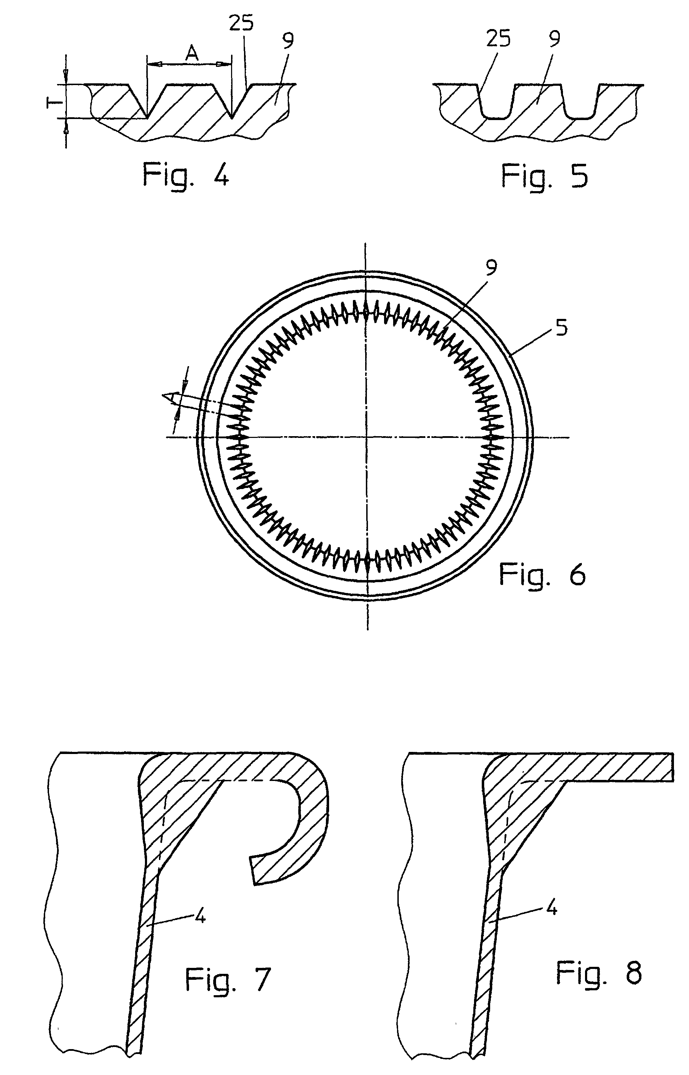

Figur 3 zeigt die Gestaltung der den Randbereich des Behälters 4 formenden Bauteile. Um den Übergangsbereich zwischen horizontalem Randbereich 22 und Behälterwand 23 des Behälters 4 zu versteifen werden an der entsprechenden Stelle der Form (bei nur formendem Formwerkzeug) bzw. des Formeinsatzes 9 bzw. bei einteiliger Ausführung (Figur 1 ) des Schnittstempels 5 in engem Abstand Kerben 25 eingebracht, die vorzugsweise einen V-förmigen Querschnitt ( Figur 4) oder einen U-förmigen Querschnitt (Figur 5) aufweisen. Die Länge der Kerben 25 ist so bemessen, daß die sich beim Verformen bildenden Rippen 26 bis über den Wulst 24 hinaus bis in den Bereich verläuft, der eine dünne Wandstärke S aufweist. Die Tiefe der Kerben 25 liegt dabei in der Größenordnung von 0,5 mm, die Länge bei ca. 3 mm. Der Abstand A der Kerben 25 liegt in der Größenordnung von 3 mm.

Durch die durch die Kerben 25 entstehenden Rippen 26 ist beim axialen und radialen Druck auf den Flansch 20 über die Nut der Bördelwalzen beim Bördeln eine ausreichende Versteifung gegeben, um einen guten Behälterrand formen zu können. Ein so gebördelter Randbereich ist in Figur 7 dargestellt.

Es hat sich gezeigt, dass auf diese Weise eingeformte Rippen 26 auch bei Behältern 4 mit Flachrand (siehe Figur 8) Vorteile bezüglich Stabilität und Verminderung von Verzug bei der Abkühlung mit sich bringen können. Dies ist vorteilhaft für eine nachfolgende Versiegelung nach einer Befüllung, sodass die Erfindung nicht beschränkt ist auf die Anwendung bei Behältern mit U-förmigem Rand.

Das zuvor beschriebene Formwerkzeug kann auch in der Weise betrieben werden, dass das Unterteil 2 an der Oberbrücke einer Formeinheit angeordnet wird, das Oberteil 1 an der Unterbrücke. Auch horizontal arbeitende Formstationen sind bekannt.

## Patentansprüche

1. Formwerkzeug zum Herstellen von Behältern (4) aus einer erwärmten thermoplastischen Kunststofffolie (3) durch Tiefziehen, bestehend aus einem Oberteil (1) mit einer Druckluftzuführung und einem Unterteil (2) mit Formen entsprechend der Gestalt der herzustellenden Behälter (4), die als Schnittstempel (5) oder als Schnittstempel (5) mit Formeinsatz (9) ausgebildet sind, **dadurch gekennzeichnet, dass** an den Formen bzw. Formeinsätzen (9) bzw. Schnittstempeln (5) der Übergangsbereich zwischen den die Behälterwand (23) und den horizontalen Randbereich (22) formenden Flächen ringsum mit Kerben (25) in einem Abstand (A) versehen ist, die in Richtung der Symmetrieachse des Behälters (4) verlaufen.

2. Formwerkzeug nach Anspruch 1 **dadurch gekennzeichnet, dass** die Kerben (25) einen V-förmigen Querschnitt aufweisen.

3. Formwerkzeug nach Anspruch 1 **dadurch gekennzeichnet, dass** die Kerben (25) einen U-förmigen Querschnitt aufweisen.

4. Formwerkzeug nach einem der Ansprüche 1 bis 3 **dadurch gekennzeichnet dass** die Kerben (25) eine Tiefe (T) im Größenbereich von 0,5 mm und eine Länge (L) im Größenbereich von 3 mm aufweisen und in einem Abstand (A) im Größenbereich von 3 mm angeordnet sind.

5. Behälter aus thermoplastischem Kunststoff, bestehend aus einem Boden, einer Behälterwand und einem flachen, U-förmigen oder gerollten Rand **gekennzeichnet durch** am gesamtem Umfang angeordnete Stege (26) im Übergangsbereich zwischen Behälterwand (23) und dem horizontal verlaufenden Bereich (22) des Randes.

6. Behälter nach Anspruch 5 **dadurch gekennzeichnet dass** die Stege (26) einen V-förmigen Querschnitt aufweisen.

7. Behälter nach Anspruch 5 **dadurch gekennzeichnet dass** die Stege (26) einen U-förmigen Querschnitt aufweisen.

8. Behälter nach einem der Ansprüche 5 bis 7 **dadurch gekennzeichnet dass** die Stege (26) eine Höhe (T) im Größenbereich von 0,5 mm und eine Länge (L) im Größenbereich von 3 mm aufweisen und in einem Abstand (A) im Größenbereich von 3 mm angeordnet sind.

## Claims

1. Mould tool for producing containers (4) from a heated thermoplastic synthetic material film (3) by deep-drawing, consisting of an upper part (1) with a compressed air feed and a lower part (2) with moulds which correspond with the shape of the container (4) to be produced and which are constructed as a punching die (5) or as a punching die (5) with a mould insert, **characterised in that** at the moulds or mould inserts (9) or punching dies (5) the transition region between the surfaces forming the container wall (23) and the horizontal edge region (22) is provided all round with notches (25) at a spacing (A), the notches extending in the direction of the axis of symmetry of the container (4).

2. Mould tool according to claim 1, **characterised in that** the notches (25) have a V-shaped cross-section.

3. Mould tool according to claim 1, **characterised in that** the notches (25) have a U-shaped cross-section.

4. Mould tool according to one of claims 1 to 3, **characterised in that** the notches (25) have a depth (T) in the order of magnitude of 0.5 mm and a length (L) in the order of magnitude of 3 mm and are arranged at a spacing (A) in the order of magnitude of 3 mm.

5. Container of thermoplastic synthetic material, consisting of a base, a container wall and a flat, U-shaped or rolled edge, **characterised by** webs (26), which are arranged at the entire circumference, in the transition region between container wall (23) and the horizontally extending region (22) of the edge.

6. Container according to claim 5, **characterised in that** the webs (26) have a V-shaped cross-section.

7. Container according to claim 5, **characterised in that** the webs (26) have a U-shaped cross-section.

8. Container according to one of claims 5 to 7, **characterised in that** the webs (26) have a height (T) in the order of magnitude of 0.5 mm and a length (L) in the order of magnitude of 3 mm and are arranged at a spacing (A) in the order of magnitude of 3 mm.

## Revendications

1. Outil de moulage pour fabriquer par étirage profond des récipients (4) à partir d'un film en matière thermoplastique (3) chauffée, moule composé d'une partie supérieure (1) avec une alimentation en air comprimé et une partie inférieure (2) ayant un moule correspondant à la forme du récipient (4) à fabriquer, cette partie étant réalisée comme poinçon de découpe (5) ou comme poinçon de découpe (5) avec une garniture de moule (9),
**caractérisé en ce que**
sur les moules, ou les garnitures de moules (9) ou les poinçons de découpe (5), la zone transitoire entre la paroi (23) du récipient et la zone de bord (22) horizontale est une surface périphérique munie d'encoches (25) réparties à la distance (A) en étant dirigées dans la direction de l'axe de symétrie du récipient (4).

2. Outil de moulage selon la revendication 1,
**caractérisé en ce que**
les encoches (25) ont une section en forme de V.

3. Outil de moulage selon la revendication 1,
**caractérisé en ce que**
les encoches (25) ont une section en forme de U.

4. Outil de moulage selon l'une quelconque des revendications 1 à 3,
**caractérisé en ce que**
les encoches (25) ont une profondeur (T) de l'ordre de 0,5 mm et une longueur (L) de l'ordre de 3 mm et leur distance (A) est de l'ordre de 3 mm.

5. Récipient en matière thermoplastique formé d'un fond, d'une paroi et d'un bord plat en U ou roulé,
**caractérisé en ce que**
l'ensemble de la périphérie comporte des entretoises (26) dans la zone périphérique entre la paroi (23) du récipient et la zone horizontale (22) du bord.

6. Récipient selon la revendication 5,
**caractérisé en ce que**
les entretoises (26) ont une section en forme de V.

7. Récipient selon la revendication 5,
**caractérisé en ce que**
les entretoises (26) ont une section en forme de U.

8. Récipient selon l'une quelconque des revendications 5 à 7,
**caractérisé en ce que**
les entretoises (26) ont une hauteur (T) de l'ordre de 0,5 mm et une longueur (L) de l'ordre de 3 mm et une distance (A) de l'ordre de 3 mm.
